# EUROPEAN PATENT SPECIFICATION

(11) **EP 3 521 151 B1**
(45) Date of publication and mention of the grant of the patent: **07.07.2021**
(21) Application number: 17856369.8
(22) Date of filing: 28.09.2017
(51) Int. Cl.: B62K 19/38, B60T 11/06, B62J 15/00, B62J 23/00, B62K 19/30, B62L 3/04, B62L 3/08, B62K 11/02

(54) **INTERLOCKING BRAKE STRUCTURE FOR SADDLE-TYPE VEHICLE**
INEINANDERGREIFENDE BREMSSTRUKTUR FÜR SATTELFAHRZEUG
STRUCTURE DE FREIN À VERROUILLAGE MUTUEL POUR VÉHICULE DU TYPE À SELLE

(30) Priority: 30.09.2016 JP 2016195270
(43) Date of publication of application: 07.08.2019
(73) Proprietor: Honda Motor Co., Ltd., Tokyo 107-8556 (JP)
(72) Inventor: IGUCHI, Takamasa, Wako-shi Saitama 351-0193 (JP)
(74) Representative: Beder, Jens
(86) International application number: PCT/JP2017/035320
(87) International publication number: WO 2018/062420

(56) References cited:
- JP-A- 2014 046 799
- JP-A- 2014 162 453
- JP-A- 2015 160 547

## Description

### [Technical Field]

The present invention relates to an interlocking brake structure for a saddle-type vehicle.

### [Background Art]

In a conventional interlocking brake structure for a saddle-type vehicle, a front wheel brake and a rear wheel brake are each drum brakes, and an interlocking brake cable is connected to a rear wheel brake operation element (a brake pedal) and a front wheel brake through an equalizer. There is known an interlocking brake structure in which when brake operation is performed by the rear wheel brake operation element, the interlocking brake cable (specifically, an inner wire) is pulled to operate the front wheel brake (see JP 2014 - 046 799 A, for example).

The interlocking brake cable extends rearward from a connection with the equalizer, followed by being curved at a predetermined curvature so as to extend forward, and is routed on a right side (a brake pedal side) of a main frame. The document JP 2015 160547 A discloses an interlocking brake structure for a saddle-type vehicle in accordance with the preamble of claim 1.

### [Summary of Invention]

### [Technical Problem]

In JP 2014 - 046 799, the interlocking brake cable is curved behind the equalizer to be directed toward the front of a vehicle body, and this curved portion is disposed between a vehicle body component and a vehicle body cover. Portions other than the curved portion of the interlocking brake cable are supported by the vehicle body using clamps that are provided on the vehicle body frame not to restrict the flexure of the curved portion, so that a degree of freedom of the flexure is provided for the curved portion. It is desirable to provide a structure in which excessive displacement of the curved portion is suppressed while ensuring the degree of freedom of the flexure of the curved portion.

An object of the present invention is to provide an interlocking brake structure for a saddle-type vehicle capable of suppressing excessive displacement of a curved portion in an interlocking brake cable while ensuring the degree of freedom of the flexure of the curved portion.

### [Solution to Problem]

In order to solve the above described problem, the present invention (first feature) provides an interlocking brake structure for a saddle-type vehicle comprising a vehicle body frame (11) includes a main frame (22) extending rearward with respect to a vehicle body from a head pipe (21), a center frame (23) extending downward with respect to the vehicle body from the main frame (22), a seat frame (24) extending rearward from the main frame (22), and a sub frame (26) connecting each of the seat frame (24) and the center frame (23) to each other and a front wheel brake (91) for braking a front wheel (13) and a rear wheel brake (92) for braking a rear wheel (16), each constituted by a drum brake. The front wheel brake (91) is disposed on a left side of the vehicle body, and a rear wheel brake operation element (94) for activating the rear wheel brake (92) is disposed on a right side of the vehicle body. The interlocking brake structure further comprises an interlocking brake cable (112) whose one end is connected to the rear wheel brake operation element (94) via an equalizer (111), wherein the interlocking brake cable (112) has a curved portion (112a) formed to be curved in a protruding manner rearward from the equalizer (111) side, followed by extending forward, and the other end of the interlocking brake cable (112) extending forward is connected to the front wheel brake (91). Thus, a braking force is applied to both of the rear wheel brake (92) and the front wheel brake (91) in response to operation of the rear wheel brake operation element (94). The curved portion (112a) includes a forward extending portion (112e) extending forward from a rear end (112c) of the curved portion (112a), and a rearward extending portion (112d) extending rearward from the equalizer (111) side. A plate-like member (78) is provided between the curved portion (112a) and the vehicle body frame (11). The plate-like member (78) is provided with a first rib (78m) for guiding the rearward extending portion (112d), and a second rib (78q) for guiding the forward extending portion (112e).

In a second feature, the plate-like member (78) may be constituted by a rear fender (77).

In a third feature, the plate-like member (78) may be covered by a side cover (65) from a side.

In a fourth feature, the first rib (78m) forms a space (131) having a cross section of an elongate hole shape, the space (131) being formed between the first rib (78m) and a stepped portion (78h) provided in the plate-like member (78), and a height of the space (131) having the elongate hole shape may be set to be larger than an outer diameter of the interlocking brake cable (112).

In a fifth feature, the second rib (78q) may restrict at least only a lower portion of the interlocking brake cable (112).

In a sixth feature, a lower portion of the plate-like member (78) includes a protrusion (78d) extending forward of the first rib (78m), and the protrusion (78d) may extend to a connection between the interlocking brake cable (112) and the equalizer (111).

In a seventh feature, the curved portion (112a) may be disposed on a lateral side of a space (155) formed by the sub frame (26), the seat frame (24), and the center frame (23), and have a shape along the sub frame (26) and the seat frame (24).

In an eighth feature, in the plate-like member (78), a rear wall (78a) attached to a back surface of the sub frame (26) and facing the rear wheel (16) is integrally formed with a side wall (78b) extending forward along a side surface of the sub frame (26) from a side edge of a right side of the rear wall (78a), and the first rib (78m) and the second rib (78q) may be formed in the side wall (78b).

### [Advantageous Effects of Invention]

According to the first feature of the present invention, the rearward extending portion and the forward extending portion are guided by the first rib and the second rib, respectively, and therefore the curved portion can be held so that the excessive displacement of the curved portion is suppressed while ensuring a degree of freedom of the flexure of the curved portion.

According to the second feature, the curved portion can be guided using existing components, thereby suppressing the cost.

According to the third feature, the side cover can protect the curved portion, the first rib, and the second rib, and the side cover is brought into contact with the end portions of the first rib and the second rib, so that vibration of the curved portion can be suppressed.

According to the fourth feature, the space in which the interlocking brake cable can be moved can be formed, thereby ensuring the degree of freedom of the flexure of the curved portion.

According to the fifth feature, at least the displacement in the up-down direction of the curved portion can be suppressed.

According to the sixth feature, the interlocking brake cable between the first rib and the connection between the interlocking brake cable and the equalizer is covered by the protrusion from below, so that the interlocking brake cable can be protected.

According to the seventh feature, the use of the sub frame and the seat frame makes it possible to increase the degree of freedom in setting of the guide position for guiding the curved portion, thereby easily ensuring a degree of freedom of the flexure of the interlocking brake cable and easily holding the curved portion.

According to the eighth feature, the vehicle body frame can be protected by the rear wall from stones, mud, or the like splashed by the rear wheel, and the curved portion can be held by the side wall. Accordingly, the plate-like member serves as a mud guard by the rear wall and a holding member by the side wall, thereby capable of reducing the number of components and reducing the cost.

### [Brief Description of Drawings]

[Figure 1] Figure 1 is a right side elevational view depicting a motorcycle including an interlocking brake structure according to the present invention.
[Figure 2] Figure 2 is a right side elevational view depicting a main portion of the motorcycle.
[Figure 3] Figure 3 is a perspective view depicting an interlocking brake cable and the surroundings thereof.
[Figure 4] Figure 4 is a right side elevational view depicting the interlocking brake cable and the surroundings thereof.
[Figure 5] Figure 5 is a plan view depicting the interlocking brake cable and the surroundings thereof.
[Figure 6] Figure 6 is an enlarged view of a main portion in Figure 5.
[Figure 7] Figure 7 is a perspective view depicting a support stay and the surroundings thereof.
[Figure 8] Figure 8 is a perspective view depicting the interlocking brake cable, a main harness, and the surroundings thereof.
[Figure 9] Figure 9 is a left side elevational view depicting a center portion of the motorcycle.
[Figure 10] Figure 10 is a left side elevational view depicting a front portion of the motorcycle.

### [Description of Embodiments]

Hereinafter, one embodiment of the present invention will be described with reference to the drawings. In the description that follows, forward, rearward, leftward, rightward, upward and downward directions are relative to the vehicle body unless otherwise specified. In the drawings, a symbol FR represents a forward direction of the vehicle body, a symbol UP represents an upward direction of the vehicle body, and a symbol LH represents a leftward direction of the vehicle body.

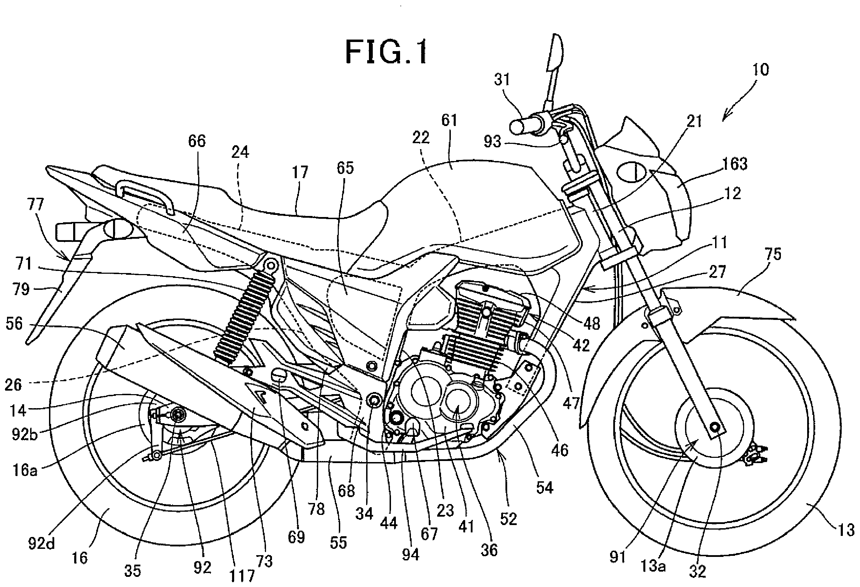

Figure 1 is a right side elevational view depicting a motorcycle 10 including an interlocking brake structure according to the present invention.

The motorcycle 10 includes a front wheel 13 supported at a front end portion of a vehicle body frame 11 via a front fork 12, a rear wheel 16 supported at a lower portion of the vehicle body frame 11 via a swing arm 14, and a seat 17 mounted on a top of the vehicle body frame 11.

The motorcycle 10 is a saddle-type vehicle on which a rider rides straddling the seat 17.

The vehicle body frame 11 is a hollow member that is formed by adhering a plurality of press-formed plate members (press materials), and includes ahead pipe 21, a main frame 22, a pair of left and right center frames 23, a pair of left and right seat frames 24, a pair of left and right sub frames 26, and a down frame 27.

The head pipe 21 forms a front end of the vehicle body frame 11. The main frame 22 extends obliquely rearward from the head pipe 21. The left and right center frames 23 each extend downward from a rear end of the main frame 22. The left and right seat frames 24 extend rearward from the left and right sides of the rear end of the main frame 22, respectively, to support the seat 17. The sub frame 26 extends between the center frame 23 and the seat frame 24. A distal end of the down frame 27 is connected to the head pipe 21 below the distal end of the main frame 22, and extends obliquely downward and rearward below the main frame 22 from the head pipe 21.

The front fork 12 supports a bar handle 31 by its upper portion, and supports the front wheel 13 by its lower portion via an axle 32. The swing arm 14 is vertically swingably supported by a pivot shaft 34 extending between lower portions of the left and right center frames 23, and the rear wheel 16 is supported at a rear end portion of the swing arm 14 via an axle 35.

An engine 36 positioned below the main frame 22 is supported by the lower portions of the left and right center frames 23 and a lower end portion of the down frame 27.

The engine 36 includes a crankcase 41, and a cylinder portion 42 extending upward from a front upper portion of the crankcase 41.

The crankcase 41 is attached to the left and right center frames 23 and the down frame 27. A transmission 44 is provided at the rear portion of the crankcase 41. The cylinder portion 42 includes a cylinder block 46 provided to protrude upward from the crankcase 41, a cylinder head 47 attached to an upper portion of the cylinder block 46, and a head cover 48 provided to cover an upper portion of the cylinder head 47.

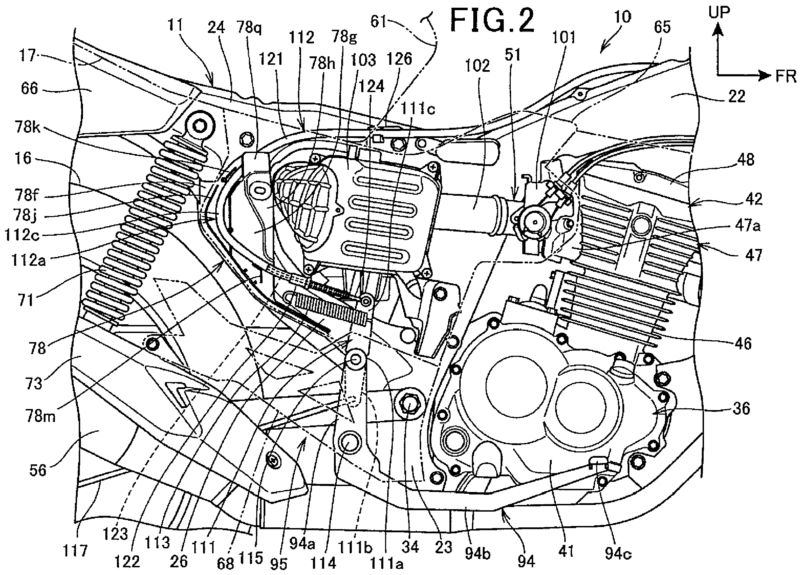

An intake device 51 (see Figure 2) is connected to a rear surface of the cylinder head 47, and an exhaust device 52 is connected to a front surface of the cylinder head 47.

The exhaust device 52 includes an exhaust pipe 54 extending forward from the cylinder head 47, followed by being bent so as to extend rearward, a catalytic device 55 connected to a rear end portion of the exhaust pipe 54, and a muffler 56 connected to a rear end portion of the catalytic device 55.

A fuel tank 61 disposed in front of the seat 17 is attached to the main frame 22 and the seat frame 24.

The vehicle body frame 11 is covered, from both sides thereof, by a pair of left and right side covers 65 and a pair of left and right rear side covers 66. A pair of left and right steps 67 for a rider are provided to the lower portion of the crankcase 41. A pair of left and right step brackets 68 supported by the vehicle body frame 11 are disposed below the side covers 65, and a step 69 for a pillion passenger is provided to a rear portion of each of the step brackets 68.

A pair of left and right rear cushion units 71 extend between the swing arm 14 and the left and right seat frames 24. The muffler 56 is covered by a heat shield cover 73 from above and lateral sides.

The front wheel 13 is covered by a front fender 75 from above. The rear wheel 16 is covered by a rear fender 77 from above. The rear fender 77 includes the front side fender 78 for covering the rear wheel 16 from an obliquely forward and upward direction thereof, and a rear side fender 79 for covering the rear wheel 16 from above and an obliquely rearward and upward direction thereof.

The front side fender 78 is integrally provided with a plate-like member extending along the sub frame 26, and the interlocking brake cable is supported by this plate-like member (the details will be described later).

The motorcycle 10 includes a front wheel brake 91 provided at the front wheel 13, and a rear wheel brake 92 provided at the rear wheel 16. The front wheel brake 91 is a drum brake. The front wheel brake 91 is activated in response to an operation of a brake lever 93 provided at one end portion (right end portion) of the bar handle 31, and the front wheel 13 is braked. The rear wheel brake 92 is a drum brake. The rear wheel brake 92 is activated in response to an operation of a brake pedal 94 provided at a lower end portion of the right center frame 23, the front wheel brake 91 is also activated in interlock with the rear wheel brake 92, and the front wheel 13 and the rear wheel 16 are braked. The brake pedal 94 is disposed on one side (right side) of the vehicle body.

Thus, the motorcycle 10 includes an interlocking brake device (CBS: Combined Brake System) 95 (see Figure 2) for interlocking and activating both of the front wheel brake 91 and the rear wheel brake 92 in response to the operation of the brake pedal 94 as a rear wheel brake operation element. Hereinafter, the interlocking brake system 95 is simply referred to as "CBS95."

Figure 2 is a right side elevational view depicting a main portion of the motorcycle 10, and the state in which the seat 17, the fuel tank 61, the side cover 65, and the step bracket 68 have been removed from the state of Figure 1.

The intake device 51 includes a throttle body 101 connected to an intake pipe portion 47a provided at a rear portion of the cylinder head 47, and an air cleaner 103 connected to a rear end portion of the throttle body 101 through a connecting tube 102.

The CBS 95 includes an arm extending portion 94a, an equalizer 111, an interlocking brake cable 112, and a tension coil spring 113.

The brake pedal 94 is swingably supported by a support shaft 114 attached to the center frame 23. The brake pedal 94 includes an arm portion 94b extending downward and forward from the support shaft 114 side, a treading portion 94c provided at a distal end portion of the arm portion 94b, and an arm extending portion 94a extending upward from the support shaft 114 side as an extending portion of the arm portion 94b. After the treading portion 94c is pressed downward, the brake pedal 94 is urged in the counterclockwise direction about the support shaft 114 by a return spring (not depicted) so that the treading portion 94c is returned to a predetermined position on the upper side.

The equalizer 111 is swingably supported by a swing shaft 115 provided at a distal end portion of the arm extending portion 94a. The equalizer 111 includes a fitting portion 111a which is turnably fitted to the swing shaft 115, a downward extending portion 111b extending downward from the fitting portion 111a, and an upward extending portion 111c extending upward from the fitting portion 111a.

One end portion of a brake rod 117 forming the rear wheel brake 92 (see Figure 1) is swingably connected to the distal end portion of the downward extending portion 111b, and one end portion of the interlocking brake cable 112 is connected to the distal end portion of the upward extending portion 111c.

The interlocking brake cable 112 includes an outer tube 121, an outer end fixture 122 provided to one end portion of the outer tube 121, an inner wire 123 which is movably inserted in the outer tube 121 and the outer end fixture 122, and an inner end fixture 124 attached to one end portion of the inner wire 123. The outer end fixture 122 is fixed to any of fixing portions such as the sub frame 26, and the step bracket 68. The inner end fixture 124 is connected to the distal end portion of the upward extending portion 111c of the equalizer 111.

One end of the tension coil spring 113 is hooked into the upward extending portion 111c, and the other end of the tension coil spring 113 is hooked into any of fixing portions such as the sub frame 26, and the step bracket 68.

The interlocking brake cable 112 extends rearward with respect to the vehicle body from the equalizer 111, followed by being curved forward with respect to the vehicle body so as to extend forward with respect to the vehicle body along the main frame 22. The interlocking brake cable 112 has a curved portion 112a which is positioned on one side (right side) of the vehicle body frame 11 between the outer end fixture 122 and a cable holder 126 attached to a side surface of the seat frame 24. That is, both ends of the curved portion 112a are restrained by the outer end fixture 122 and the cable holder 126, respectively.

A portion ahead of the portion held by the cable holder 126 of the interlocking brake cable 112 extends forward with respect to the vehicle body on one side (right side) of the seat frame 24 and the main frame 22 along the seat frame 24 and the main frame 22. The curved portion 112a is positioned on the sides of the seat frame 24 and the sub frame 26, and is supported by the plate-like member provided on the front side fender 78 of the rear fender 77 (see Figure 1) at a plurality of positions. The plate-like member (front side fender 78) is covered by the side cover 65 from the side.

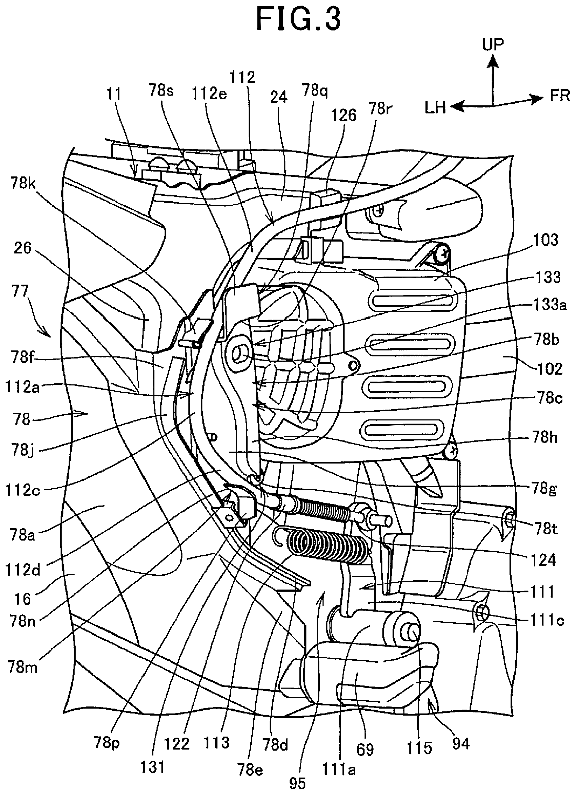

Figure 3 is a perspective view depicting the interlocking brake cable 112 and the surroundings thereof.

In the front side fender 78 of the rear fender 77 (see Figure 1), a rear wall 78a attached to a back surface of the sub frame 26 and facing the rear wheel 16 is integrally formed with a side wall 78b (plate-like member) extending forward along a side surface of the sub frame 26 from a side edge of one side (right side) of the rear wall 78a. The front side fender 78 protects the vehicle body frame 11 and the like from stones, mud, or the like splashed by the rear wheel 16.

The side wall 78b (plate-like member) includes an upper side wall 78c which is positioned behind the air cleaner 103, a lower extending portion 78d extending obliquely forward and downward from a lower end of the upper side wall 78c, and a lower end extending portion 78e extending obliquely forward and downward below the lower extending portion 78d to protrude forward of the lower extending portion 78d.

The upper side wall 78c includes a base wall 78f disposed in the proximity of the sub frame 26 along the side surface of the sub frame 26, a first stepped portion 78g protruding toward the side by one stage from the base wall 78f, and a second stepped portion 78h further protruding toward the side by one stage from the first stepped portion 78g.

The base wall 78f, the first stepped portion 78g, and the second stepped portion 78h are arranged toward the front of the vehicle in this order.

A rear rising wall 78j is formed on the base wall 78f, the rear rising wall 78j protruding toward the side and being bent in a V-shape when viewed from the side along the curved portion 112a of the interlocking brake cable 112. The rear rising wall 78j covers the curved portion 112a from behind. A lower end portion of the rear rising wall 78j is connected to the lower extending portion 78d. The above-described rear rising wall 78j can protect the curved portion 112a from flying stones or the like from behind.

A portion (rear end) positioned at the rearmost portion of the curved portion 112a is referred to as a top 112c of the curved portion. The curved portion 112a includes a portion below the top 112c of the curved portion as a rearward extending portion 112d, and a portion above the top 112c of the curved portion as a forward extending portion 112e. The rearward extending portion 112d extends rearward from the equalizer 111 side, and the forward extending portion 112e extends forward with respect to the vehicle from the top 112c of the curved portion.

An upper rising wall 78k is formed across both of the base wall 78f and the first stepped portion 78g, the upper rising wall 78k protruding toward the side along the forward extending portion 112e of the curved portion 112a while being in close proximity to the forward extending portion 112e. The upper rising wall 78k suppresses excessive vibration (displacement) of the curved portion 112a due to vibration and shaking of the vehicle body.

A lower rising portion 78m is formed on a lower portion of the first stepped portion 78g, the lower rising portion 78m protruding toward the side while being in contact with the rearward extending portion 112d of the curved portion 112a. The lower rising portion 78m includes an upper rising piece 78n extending along the rearward extending portion 112d and being in contact with a lower surface of the rearward extending portion 112d, and a lower rising piece 78p extending downward integrally from a lower end of the upper rising piece 78n, so that the lower rising portion 78m is formed in a V-shape when viewed from the side.

A height of the second stepped portion 78h from the first stepped portion 78g is approximately equal to the height of the lower rising portion 78m from the first stepped portion 78g, and the height of the second stepped portion 78h and the height of the lower rising portion 78m are each larger than an outer diameter of the interlocking brake cable 112. Accordingly, for example, even when the side cover 65 contacts the second stepped portion 78h and the lower rising portion 78m from the side, the interlocking brake cable 112 can ensure the flexure (displacement) in the vehicle width direction of the curved portion 112a in a space 131 surrounded by the first stepped portion 78g, the second stepped portion 78h, the lower rising portion 78m, and the side cover 65. A cross-sectional shape of this space 131 in a direction perpendicular to the interlocking brake cable 112 is a shape of an elongate hole that is long in the vehicle width direction, and therefore, as described above, the interlocking brake cable 112 can be flexed (displaced) in the longitudinal direction of the elongate hole in the above-described space 131.

An upper holding portion 78q for holding the forward extending portion 112e is formed across both of the first stepped portion 78g and the second stepped portion 78h. In the upper holding portion 78q, a rising holding portion 78r erected to protrude toward the side from the first stepped portion 78g and the second stepped portion 78h is integrally formed with an upward extending holding portion 78s extending upward from a side edge of the rising holding portion 78r. The rising holding portion 78r is brought into contact with the lower surface of the forward extending portion 112e to hold the forward extending portion 112e. The upward extending holding portion 78s can hold the forward extending portion 112e by being in contact with or in close proximity to the side surface of the forward extending portion 112e.

Note that without forming the upward extending holding portion 78s, only the rising holding portion 78r may be formed in the upper holding portion 78q.

A lower end portion 78t of the second stepped portion 78h is disposed to face the lower rising portion 78m, and the rearward extending portion 112d is disposed in the space 131 between the lower rising portion 78m (specifically, the upper rising piece 78n of the lower rising portion 78m) and the second stepped portion 78h (specifically, the lower end portion 78t of the second stepped portion 78h). The lower end portion 78t of the second stepped portion 78h is in close proximity to the rearward extending portion 112d. Accordingly, the rearward extending portion 112d can be flexed (displaced) away from the lower rising portion 78m and toward the lower end portion 78t side of the second stepped portion 78h.

A grommet 133 made of a rubber including a hole 133a is attached to the upper portion of the second stepped portion 78h below the upper holding portion 78q, the hole 133a being provided for inserting and engaging a protrusion formed on a back surface of the side cover 65 (see Figure 1).

As depicted in Figures 1 to 3 described above, the vehicle body frame 11 includes the main frame 22 extending rearward with respect to the vehicle body from the head pipe 21, the center frame 23 extending downward with respect to the vehicle body from the main frame 22, the seat frame 24 extending rearward from the main frame 22, and the sub frame 26 connecting each of the seat frame 24 and the center frame 23 to each other.

The front wheel brake 91 for braking the front wheel 13 and the rear wheel brake 92 for braking the rear wheel 16 are each constituted by a drum brake. The front wheel brake 91 is disposed on the left side of the vehicle body, and the brake pedal 94 as a rear wheel brake operation element for activating the rear wheel brake 92 is disposed on the right side of the vehicle body.

One end of the interlocking brake cable 112 is connected to the brake pedal 94 via the equalizer 111, the interlocking brake cable 112 has the curved portion 112a formed to be curved in a protruding manner rearward from the equalizer 111 side, followed by extending forward, and the other end of the interlocking brake cable 112 extending forward is connected to the front wheel brake 91. Thus, a braking force is applied to both of the rear wheel brake 92 and the front wheel brake 91 in response to operation of the brake pedal 94.

The curved portion 112a includes the forward extending portion 112e extending forward from the top 112c of the curved portion as a rear end of the curved portion 112a, and the rearward extending portion 112d extending rearward from the equalizer 111 side. The side wall 78b (plate-like member) of the front side fender 78 is provided between the curved portion 112a and the vehicle body frame 11. The side wall 78b (plate-like member) of the front side fender 78 is provided with the lower rising portion 78m as a first rib for guiding the rearward extending portion 112d, and the upper holding portion 78q as a second rib for guiding the forward extending portion 112e. The side wall 78b (plate-like member) of the front side fender 78 is covered by the side cover 65 from the side.

According to this configuration, the rearward extending portion 112d and the forward extending portion 112e are guided by the lower rising portion 78m and the upper holding portion 78q, respectively, and therefore the curved portion 112a can be held so that the excessive displacement of the curved portion 112a is suppressed while ensuring a degree of freedom of the flexure of the curved portion 112a.

Furthermore, the side cover 65 protects the curved portion 112a, the lower rising portion 78m, and the upper holding portion 78q. The side cover 65 is brought into contact with the end portions of the lower rising portion 78m and the upper holding portion 78q, so that vibration in the vehicle width direction of the curved portion 112a can be suppressed.

The plate-like member is integrally constituted by the rear fender 77 (specifically, the front side fender 78). According to this configuration, since the curved portion 112a can be guided using existing components, the curved portion 112a can be guided without using any special components, thereby suppressing the cost.

Note that the plate-like member may be provided separately from the rear fender 77 (specifically, the front side fender 78). Alternatively, if a plate-like guide member attached to an attachment member other than the rear fender 77 is configured to guide the interlocking brake cable 112, the attachment member is not limited.

The lower rising portion 78m forms the space 131 having a cross section of an elongate hole shape, the space 131 being formed between the lower rising portion 78m and the second stepped portion 78h as a stepped portion provided in the front side fender 78, and the height of the space 131 having the elongate hole shape (the height in the vehicle width direction) is set to be larger than the outer diameter of the interlocking brake cable 112. According to this configuration, the space 131 in which the interlocking brake cable 112 can be moved can be formed, thereby ensuring the degree of freedom of the flexure of the curved portion 112a.

The upper holding portion 78q restricts at least only the lower portion of the interlocking brake cable 112. According to this configuration, at least the displacement in the up-down direction of the curved portion 112a can be suppressed.

The lower portion of the front side fender 78 includes the lower extending portion 78d as a protrusion extending forward of the lower rising portion 78m, and the lower extending portion 78d extends to a connection between the interlocking brake cable 112 and the equalizer 111. According to this configuration, the interlocking brake cable 112 between the lower rising portion 78m and the connection between the interlocking brake cable 112 and the equalizer 111 is covered by the lower extending portion 78d from below, so that the interlocking brake cable 112 can be protected.

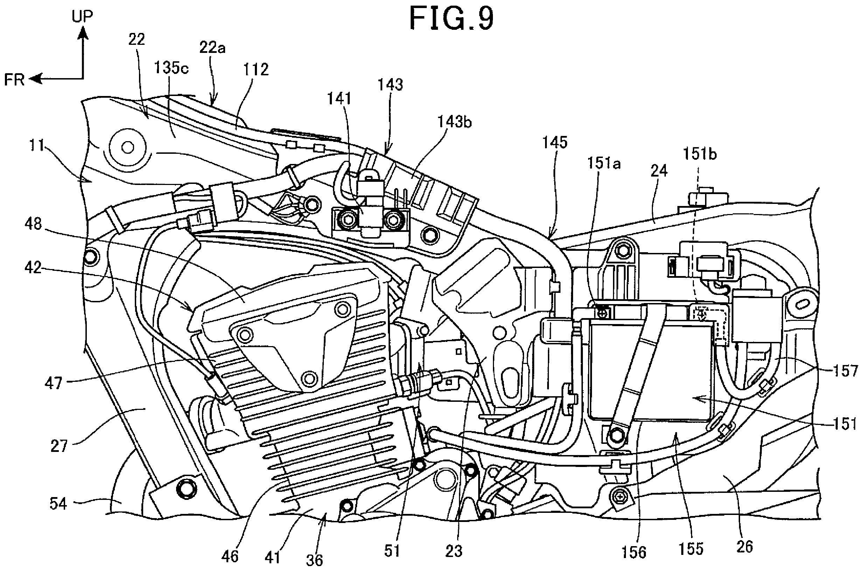

The curved portion 112a is disposed on the lateral side of a space 155 (see Figure 9) formed by the sub frame 26, the seat frame 24, and the center frame 23, and has a shape along the sub frame 26 and the seat frame 24. According to this configuration, the use of the sub frame 26 and the seat frame 24 makes it possible to increase the degree of freedom in setting of the guide position for guiding the curved portion 112a, thereby easily ensuring a degree of freedom of the flexure of the curved portion 112a and easily holding the curved portion 112a.

In the front side fender 78, the rear wall 78a attached to the back surface of the sub frame 26 and facing the rear wheel 16 is integrally formed with the side wall 78b extending forward along the side surface of the sub frame 26 from the side edge of the right side of the rear wall 78a, and the lower rising portion 78m and the upper holding portion 78q are formed in the side wall 78b.

According to this configuration, the vehicle body frame 11 can be protected by the rear wall 78a from stones, mud, or the like splashed by the rear wheel 16, and the curved portion 112a can be held by the side wall 78b. Accordingly, the front side fender 78 serves as a mud guard by the rear wall 78a and a holding member by the side wall 78b, thereby capable of reducing the number of components and reducing the cost.

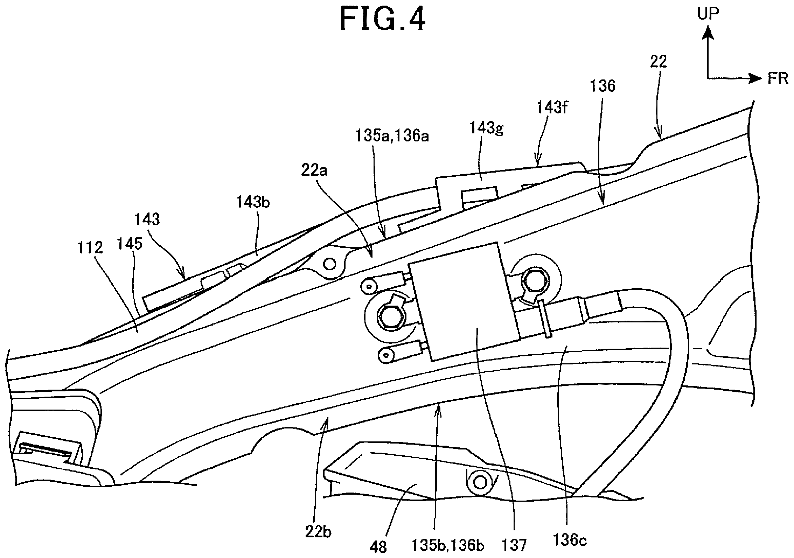

Figure 4 is a right side elevational view depicting the interlocking brake cable 112 and the surroundings thereof.

In the front side of the curved portion 112a (see Figure 2), the interlocking brake cable 112 is disposed along the main frame 22. Specifically, when the interlocking brake cable 112 extends forward with respect to the vehicle, the arrangement of the interlocking brake cable 112 is changed to extend from one side (right side) of the main frame 22 to the other side (left side) thereof, passing above the main frame 22.

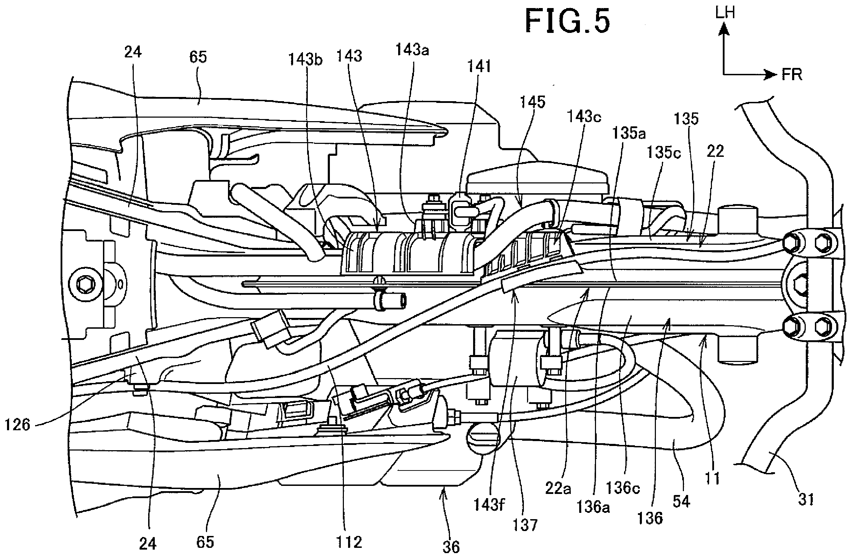

The main frame 22 is constituted by a pair of a left frame half 135 (see Figure 5) and a right frame half 136, the left frame half 135 and the right frame half 136 being formed by press forming and being joined to each other. The left frame half 135 integrally includes an upper flange 135a and a lower flange 135b which are formed at an upper edge and a lower edge of the left frame half 135, respectively, and a left protruding portion 135c (see Figure 5) formed to protrude toward the left side between the upper flange 135a and the lower flange 135b. Likewise, the right frame half 136 integrally includes an upper flange 136a and a lower flange 136b which are formed at an upper edge and a lower edge of the right frame half 136, respectively, and a right protruding portion 136c formed to protrude toward the right side between the upper flange 136a and the lower flange 136b.

The upper flange 135a and the lower flange 135b are joined to the upper flange 136a and the lower flange 136b, respectively, to form the main frame 22. The upper flange 135a and the upper flange 136a form an upper flange joining portion 22a, and the upper flange joining portion 22a protrudes upward. The lower flange 135b and the lower flange 136b form a lower flange joining portion 22b, and the lower flange joining portion 22b protrudes downward. The upper flange joining portion 22a and the lower flange joining portion 22b are each formed over the entire length of the main frame 22.

An ignition coil 137 connected to an ignition plug is attached to one side portion (right frame half 136) of the main frame 22.

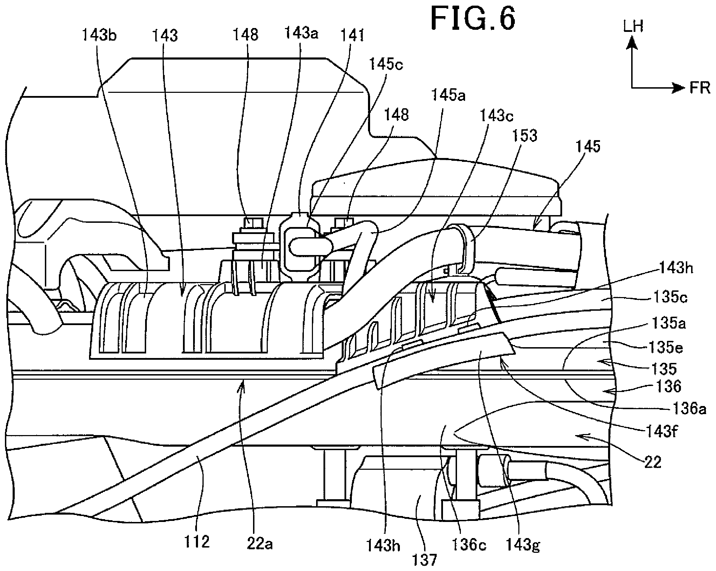

Figure 5 is a plan view depicting the interlocking brake cable 112 and the surroundings thereof, and Figure 6 is an enlarged view of a main portion in Figure 5.

As depicted in Figures 5 and 6, when the interlocking brake cable 112 extends forward with respect to the vehicle from the curved portion 112a (see Figure 2) side, the interlocking brake cable 112 extends to move from the right side of the vehicle body frame 11 (the seat frame 24 and the main frame 22 in Figure 5) to the left side thereof.

A support stay 143 for supporting a bank angle sensor 141 as an electronic component is attached to the main frame 22, specifically, the left frame half 135.

The support stay 143 has functions of guiding the main harness 145 extending in the front-rear direction on the other side (left side) of the main frame 22 along the main frame 22, and guiding, holding and protecting the interlocking brake cable 112 passing above the main frame 22. That is, the support stay 143 includes an electronic component supporting portion 143a for supporting the bank angle sensor 141, a harness guiding portion 143b for guiding the main harness 145, and a cable supporting portion 143c for guiding, holding and protecting the interlocking brake cable 112.

The electronic component supporting portion 143a and the harness guiding portion 143b are disposed on the left side of the upper flange joining portion 22a of the main frame 22. The cable supporting portion 143c extends from the left side to the right side of the upper flange joining portion 22a, and is disposed to cross over the upper flange joining portion 22a. Thus, the cable supporting portion 143c covers the upper flange joining portion 22a of the main frame 22 from above, and the interlocking brake cable 112 is disposed above the cable supporting portion 143c.

The harness guiding portion 143b is disposed above the main harness 145, and guides the main harness 145 in the front-rear direction. The cable supporting portion 143c is disposed below the main harness 145, and a clamping portion 143f guides and holds the interlocking brake cable 112 obliquely with respect to the front-rear direction. The harness guiding portion 143b and the cable supporting portion 143c disposed in front of the harness guiding portion 143b are disposed so as to be in close proximity in the front-rear direction. Accordingly, the main harness 145 can be sandwiched between the front end portion of the harness guiding portion 143b and the rear end portion of the cable supporting portion 143c in the up-down direction or can be in close proximity to the front end portion of the harness guiding portion 143b and the rear end portion of the cable supporting portion 143c in the up-down direction, thereby suppressing the vibration (particularly, the vibration in the up-down direction) of the main harness 145. This can prevent the interference between the main harness 145 and the interlocking brake cable 112. The clamping portion 143f is provided to be spaced from the harness guiding portion 143b so that the interlocking brake cable 112 and the main harness 145 are made to have directivity without causing stress.

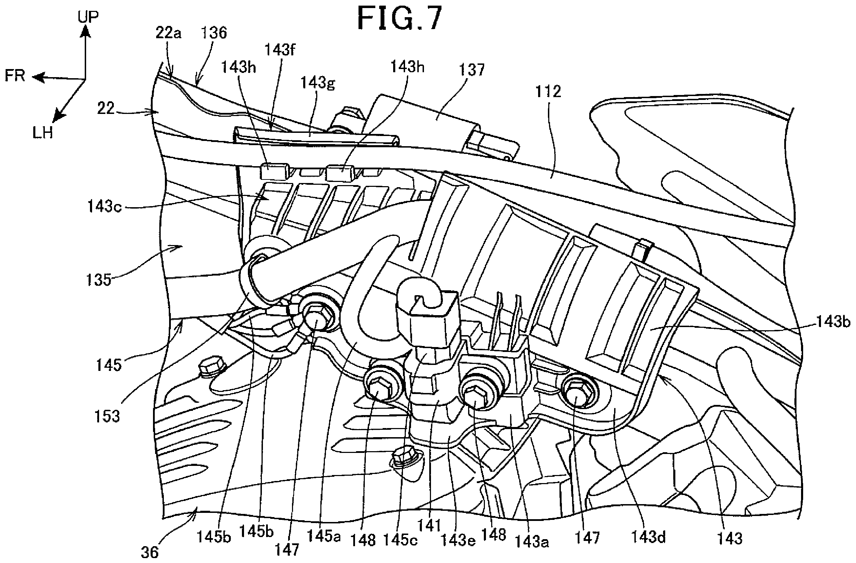

Figure 7 is a perspective view depicting the support stay 143 and the surroundings thereof.

The support stay 143 integrally includes the electronic component supporting portion 143a, the harness guiding portion 143b, the cable supporting portion 143c, and a base portion 143d.

The base portion 143d is attached to the main frame 22, specifically, the side of the left frame half 135 by a plurality of bolts 147. The electronic component supporting portion 143a is a portion formed to protrude from the base portion 143d toward the left side, and the bank angle sensor 141 is attached to the electronic component supporting portion 143a by a pair of bolts 148. The bank angle sensor 141 detects front and rear inclinations and left and right inclinations of the vehicle body. The electronic component supporting portion 143a is integrally formed with a heat shield wall 143e which covers the bank angle sensor 141 from below, so that the heat shield wall 143e can protect the bank angle sensor 141 from heat radiating from the engine 36.

The harness guiding portion 143b extends upward from the base portion 143d, followed by being curved inward in the vehicle width direction, so as to cover the main harness 145. The main harness 145 is disposed between the left frame half 135 and the harness guiding portion 143b to be guided in the front-rear direction.

The cable supporting portion 143c is separated from the harness guiding portion 143b in the front-rear direction, and extends obliquely upward and inward in the vehicle width direction from the base portion 143d. The cable supporting portion 143c integrally includes the clamping portion 143f for clamping and holding the interlocking brake cable 112 on an upper portion of the cable supporting portion 143c.

The clamping portion 143f includes a gripping portion 143g which is formed on the upper edge of the cable supporting portion 143c to grip the interlocking brake cable 112 inside the gripping portion 143g, and a plurality of protrusions 143h, 143h which are provided on the top surface of the cable supporting portion 143c to face the gripping portion 143g. The interlocking brake cable 112 is sandwiched and held between the gripping portion 143g and the plurality of protrusions 143h, 143h.

Thus, the interlocking brake cable 112 is supported by the cable supporting portion 143c of the support stay 143 above the main frame 22, and therefore the interlocking brake cable 112 can be prevented from interfering with the upper flange joining portion 22a of the main frame 22.

The main harness 145 bundles a plurality of conducting wires for supplying the electric power to each electronic component including the bank angle sensor 141 from a battery 151 (see Figure 9) connected to one end portion of the main harness 145. For example, the main harness 145 includes a branch harness 145a including a plurality of conducting wires, and a plurality of conducting wires 145b. The branch harness 145a is provided with a connector 145c at a distal end portion of the branch harness 145a, and the connector 145c is connected to the bank angle sensor 141. The plurality of conducting wires 145b are fastened to the main frame 22 together with the base portion 143d by the bolts 147. The plurality of conducting wires 145b are ground wires which are electrically connected to the vehicle body frame 11.

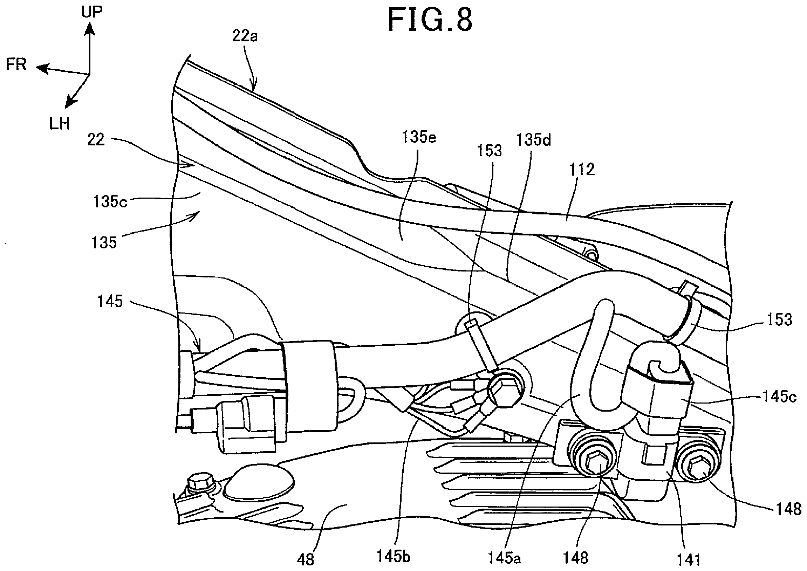

Figure 8 is a perspective view depicting the interlocking brake cable 112, the main harness 145, and the surroundings thereof, and the support stay 143 (see Figure 7) is omitted from Figure 8.

The interlocking brake cable 112 is gradually positioned below the upper edge of the upper flange joining portion 22a in the front side of a portion positioned above the upper flange joining portion 22a of the main frame 22, and is positioned on the left side of the upper flange joining portion 22a and the left side of the left protruding portion 135c. The height from the upper edge of the left protruding portion 135c to the upper edge of the upper flange joining portion 22a is larger than the outer diameter of the interlocking brake cable 112. Accordingly, when the interlocking brake cable 112 is disposed above the left protruding portion 135c and on the lateral side of the upper flange joining portion 22a, the interlocking brake cable 112 can be disposed not to protrude above the upper flange joining portion 22a. Thus, the interlocking brake cable 112 can be prevented from interfering with the fuel tank 61 (see Figure 1) disposed above the main frame 22.

A chamfering portion 135e is formed, by press forming, in a portion to which the interlocking brake cable 112 is in close proximity, in a corner portion 135d above the left protruding portion 135c. Forming such a chamfering portion 135e enables the interlocking brake cable 112 to be prevented from interfering with the main frame 22, and enables the interlocking brake cable 112 to be disposed in close proximity to the main frame 22, and the vehicle body can be made compact.

The main harness 145 is fixed to the main frame 22 by a plurality of harness fixtures 153.

Figure 9 is a left side elevational view depicting a center portion of the motorcycle 10.

A portion of a battery housing case 156 is disposed in the space 155 surrounded by the center frame 23, the seat frame 24 and the sub frame 26 of the vehicle body frame 11, and the other portion of the battery housing case 156 is disposed in a space on the left side of the space 155. The battery 151 is housed in the battery housing case 156. The main harness 145 is connected to a positive terminal 151a of the battery 151, and a ground conducting wire 157 to be connected to the vehicle body frame 11 is connected to a negative terminal 151b of the battery 151.

The main harness 145 extends upward from the battery 151, is further bent obliquely forward and upward to be guided through the harness guiding portion 143b of the support stay 143, and is guided to the left side of the upper end portion of the down frame 27 further through the left side of the main frame 22.

The interlocking brake cable 112 is disposed separated above the main harness 145 in the front side of the support stay 143, and extends forward on the left sides of the upper flange joining portion 22a and the left protruding portion 135c along the upper flange joining portion 22a and the left protruding portion 135c.

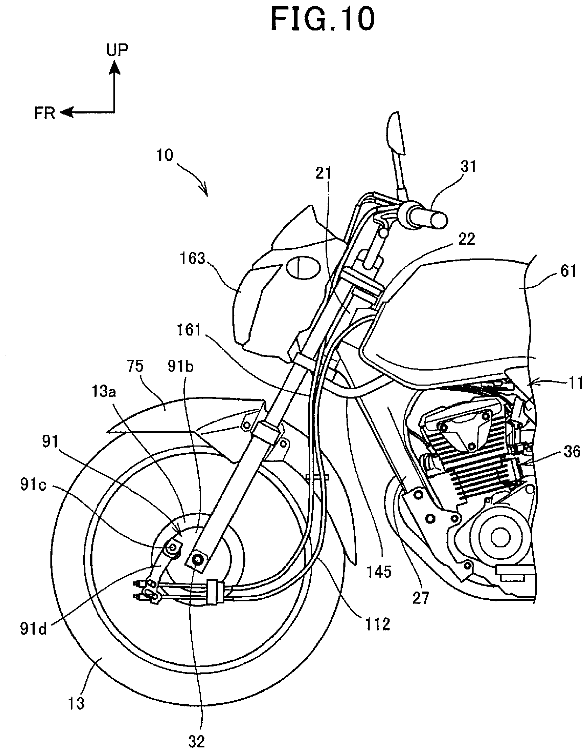

Figure 10 is a left side elevational view depicting a front portion of the motorcycle 10.

The front wheel 13 is provided with the front wheel brake 91 at the center portion of the front wheel 13. The front wheel brake 91 includes a brake drum (not depicted), a brake panel 91b, a brake shoe (not depicted), a cam (not depicted), a cam shaft 91c, and a brake arm 91d.

The brake drum is integrally formed with a hub 13a provided at a center portion of the front wheel 13. The brake panel 91b is fixed to the axle 32 to close an opening of the brake drum 91a, and each one end portion of a pair of brake shoes is swingably supported by the brake panel 91b.

A cam is disposed between the other end portions of the pair of brake shoes. One end portion of the cam shaft 91c rotatably supported by the brake panel 91b is attached to the cam, and the cam shaft 91c protrudes outside through the brake panel 91b. One end portion of the brake arm 91d is attached to the other end portion which protrudes outside the cam shaft 91c, and one end portion of a cable 161 for a front wheel brake is connected to the other end portion of the brake arm 91d. The other end portion of the cable 161 for a front wheel brake is connected to the brake lever 93 (see Figure 1) provided in the bar handle 31.

The inner wire in an outer tube of the cable 161 for a front wheel brake is pulled in response to operation of the brake lever 93. Thus, the swinging of the brake arm 91d causes the cam to rotate together with the cam shaft 91c, a pair of brake shoes are pressed against an inner peripheral surface of the brake drum, and the front wheel 13 is braked.

The interlocking brake cable 112 is bent downward from the front end portion of the main frame 22, extends downward along the head pipe 21, and extends to the front wheel brake 91 in a similar manner to the cable 161 for a front wheel brake. A distal end portion of the interlocking brake cable 112 is connected to the brake arm 91d.

Since the brake arm 91d is disposed on the other side (left side) of the vehicle body, the front wheel brake 91 is operated from the other side (left side) of the vehicle body. Thus, it can be said that the front wheel brake 91 is disposed on the other side (left side) of the vehicle body.

The main harness 145 extends from the left side of the down frame 27 through below the down frame 27, and a portion of the main harness 145 is guided to behind a headlight 163, and is connected to a rear portion of the headlight 163. The other portion of the main harness 145 is connected to the other lighting device or the electronic component.

The interlocking brake cable 112 and the main harness 145 do not cross or contact on their way.

Returning to Figure 1, the rear wheel 16 is provided with the rear wheel brake 92 at the center portion of the rear wheel 16. The rear wheel brake 92 includes a brake drum (not depicted), a brake panel 92b, a brake shoe (not depicted), a cam (not depicted), a cam shaft (not depicted), and a brake arm 92d. Since the brake arm 92d is disposed on one side (right side) of the vehicle body, the rear wheel brake 92 is operated from the one side (right side) of the vehicle body. Thus, it can be said that the rear wheel brake 92 is disposed on the one side (right side) of the vehicle body.

The brake drum is integrally formed with a hub 16a provided at a center portion of the rear wheel 16. The brake panel 92b is fixed to the axle 35 to close an opening of the brake drum, and each one end portion of a pair of brake shoes is swingably supported by the brake panel 92b.

A cam is disposed between the other end portions of the pair of brake shoes. One end portion of the cam shaft rotatably supported by the brake panel 92b is attached to the cam, and the cam shaft protrudes outside through the brake panel 92b. One end portion of the brake arm 92d is attached to the other end portion which protrudes outside the cam shaft, and one end portion of a brake rod 117 is connected to the other end portion of the brake arm 92d. The other end portion of the brake rod 117 is connected to the lower portion of the equalizer (see Figure 2) of the CBS 95 (see Figure 2).

When the brake pedal 94 is operated, referring to Figure 2, the equalizer 111 is moved forward in response to clockwise swinging of the arm extending portion 94a, and the brake rod 117 and the inner wire 123 of the interlocking brake cable 112 are pulled forward. As a result, in the rear wheel brake 92 depicted in Figure 1, the swinging of the brake arm 92d causes the cam to rotate, so that a pair of brake shoes are pressed against an inner peripheral surface of the brake drum, and the rear wheel 16 is braked. At the same time, in the front wheel brake 91 depicted in Figure 10, the swinging of the brake arm 91d connected to the inner wire 123 of the interlocking brake cable 112 causes the front wheel 13 to be braked, as in the description above.

It is understood that the embodiments described above merely represent one aspect of the present invention, and may be arbitrarily altered or applied within the scope of the present invention.

For example, in the above-described embodiment, a rear wheel brake operation element is not limited to the brake pedal 94 depicted in Figure 2, but the rear wheel brake operation element may be a pedal, a lever, a slidable member, or a turnable member which is provided on the right side of the vehicle body.

The present invention is applicable to, not only the motorcycle 10 but also saddle-type vehicles other than the motorcycle 10. Note that the saddle-type vehicle includes general types of vehicles that include vehicle bodies straddled by the rider, including three-wheeled vehicles and four-wheeled vehicles classified as all-terrain vehicles (ATVs), in addition to the motorcycles (including motor-assisted bicycles).

### [Reference Signs List]

- 10: Motorcycle (saddle-type vehicle)
- 11: Vehicle body frame
- 13: Front wheel
- 16: Rear wheel
- 21: Head pipe
- 22: Main frame
- 23: Center frame
- 24: Seat frame
- 26: Sub frame
- 65: Side cover
- 77: Rear fender
- 78: Front side fender (plate-like member)
- 78a: Rear wall
- 78b: Side wall
- 78d: Lower extending portion (protrusion)
- 78h: Second stepped portion (stepped portion)
- 78m: Lower rising portion (first rib)
- 78q: Upper holding portion (second rib)
- 91: Front wheel brake
- 92: Rear wheel brake
- 94: Brake pedal (rear wheel brake operation element)
- 111: Equalizer
- 112: Interlocking brake cable
- 112a: Curved portion
- 112c: Top of curved portion (rear end)
- 112d: Rearward extending portion
- 112e: Forward extending portion
- 131, 155: Space

## Claims

1. An interlocking brake structure for a saddle-type vehicle, the brake structure comprising:
a vehicle body frame (11) that includes a main frame (22) extending rearward with respect to a vehicle body from a head pipe (21), a center frame (23) extending downward with respect to the vehicle body from the main frame (22), a seat frame (24) extending rearward from the main frame (22), and a sub frame (26) connecting each of the seat frame (24) and the center frame (23) to each other;
a front wheel brake (91) for braking a front wheel (13);
a rear wheel brake (92) for braking a rear wheel (16), the front wheel brake (91) and the rear wheel brake (92) each being constituted by a drum brake, the front wheel brake (91) being disposed on a left side of the vehicle body;
a rear wheel brake operation element (94), for activating the rear wheel brake (92), which is disposed on a right side of the vehicle body,; and
an interlocking brake cable (112) whose one end is connected to the rear wheel brake operation element (94) via an equalizer (111), wherein
the interlocking brake cable (112) has a curved portion (112a) formed to be curved in a protruding manner rearward from the equalizer (111) side, followed by extending forward, and the other end of the interlocking brake cable (112) extending forward is connected to the front wheel brake (91), so that a braking force is applied to both of the rear wheel brake (92) and the front wheel brake (91) in response to operation of the rear wheel brake operation element (94), cha
racterized in that
the curved portion (112a) includes a forward extending portion (112e) extending forward from a rear end (112c) of the curved portion (112a), and a rearward extending portion (112d) extending rearward from the equalizer (111) side, and
a plate-like member (78) is provided between the curved portion (112a) and the vehicle body frame (11), and the plate-like member (78) is provided with a first rib (78m) for guiding the rearward extending portion (112d), and a second rib (78q) for guiding the forward extending portion (112e).

2. The interlocking brake structure for a saddle-type vehicle according to claim 1, wherein
the plate-like member (78) is constituted by a rear fender (77).

3. The interlocking brake structure for a saddle-type vehicle according to claim 1 or 2, wherein
the plate-like member (78) is covered by a side cover (65) from a side.

4. The interlocking brake structure for a saddle-type vehicle according to any one of claims 1 to 3, wherein
the first rib (78m) forms a space (131) having a cross section of an elongate hole shape, the space (131) being formed between the first rib (78m) and a stepped portion (78h) provided in the plate-like member (78), and a height of the space (131) having the elongate hole shape is set to be larger than an outer diameter of the interlocking brake cable (112).

5. The interlocking brake structure for a saddle-type vehicle according to any one of claims 1 to 4, wherein
the second rib (78q) restricts at least only a lower portion of the interlocking brake cable (112).

6. The interlocking brake structure for a saddle-type vehicle according to any one of claims 1 to 5, wherein
a lower portion of the plate-like member (78) includes a protrusion (78d) extending forward of the first rib (78m), and the protrusion (78d) extends to a connection between the interlocking brake cable (112) and the equalizer (111).

7. The interlocking brake structure for a saddle-type vehicle according to any one of claims 1 to 6, wherein
the curved portion (112a) is disposed on a lateral side of a space (155) formed by the sub frame (26), the seat frame (24), and the center frame (23), and has a shape along the sub frame (26) and the seat frame (24).

8. The interlocking brake structure for a saddle-type vehicle according to any one of claims 1 to 7, wherein
in the plate-like member (78), a rear wall (78a) attached to a back surface of the sub frame (26) and facing the rear wheel (16) is integrally formed with a side wall (78b) extending forward along a side surface of the sub frame (26) from a side edge of a right side of the rear wall (78a), and the first rib (78m) and the second rib (78q) are formed in the side wall (78b).

## Patentansprüche

1. Konstruktion zur gegenseitigen Koppelung von Bremsen für ein Fahrzeug vom Satteltyp, wobei die Bremskonstruktion aufweist:
einen Fahrzeugkarosserierahmen (11) mit einem Hauptrahmen (22), der sich in Bezug auf eine Fahrzeugkarosserie von einem Kopfrohr (21) aus nach hinten erstreckt, einen Mittelrahmen (23), der sich in Bezug auf die Fahrzeugkarosserie von dem Hauptrahmen (22) aus nach unten erstreckt, einen Sitzrahmen (24), der sich von dem Hauptrahmen (22) aus nach hinten erstreckt, und einen Unterrahmen (26), der sowohl den Sitzrahmen (24) als auch den Mittelrahmen (23) miteinander verbindet;
eine Vorderradbremse (91) zum Abbremsen eines Vorderrades (13);
eine Hinterradbremse (92) zum Abbremsen eines Hinterrades (16), wobei die Vorderradbremse (91) und die Hinterradbremse (92) jeweils durch eine Trommelbremse gebildet werden und die Vorderradbremse (91) auf einer linken Seite der Fahrzeugkarosserie angeordnet ist;
ein auf einer rechten Seite der Fahrzeugkarosserie angeordnetes Hinterradbremsbetätigungselement (94) zum Aktivieren der Hinterradbremse (92), und
ein Koppelungsbremskabel (112), dessen eines Ende über einen Ausgleicher (111) mit dem Hinterradbremsbetätigungselement (94) verbunden ist, wobei
das Koppelungsbremskabel (112) einen gekrümmten Abschnitt (112a) aufweist, der so ausgebildet ist, dass er von der Seite des Ausgleichselements (111) nach hinten vorspringend gekrümmt ist und sich anschließend nach vorne erstreckt, und das andere Ende des sich nach vorne erstreckenden Koppelungsbremskabels (112) mit der Vorderradbremse (91) verbunden ist, so dass als Reaktion auf die Betätigung des Hinterradbremsbetätigungselements (94) eine Bremskraft sowohl auf die Hinterradbremse (92) als auch auf die Vorderradbremse (91) aufgebracht wird,
**dadurch gekennzeichnet, dass**
der gekrümmte Abschnitt (112a) einen sich nach vorne erstreckenden Abschnitt (112e) aufweist, der sich von einem hinteren Ende (112c) des gekrümmten Abschnitts (112a) nach vorne erstreckt, und einen sich nach hinten erstreckenden Abschnitt (112d), der sich von der Seite des Ausgleichselement (111) nach hinten erstreckt, und
ein plattenförmiges Element (78) zwischen dem gekrümmten Abschnitt (112a) und dem Fahrzeugkarosserierahmen (11) vorgesehen ist, und das plattenförmige Element (78) mit einer ersten Rippe (78m) zum Führen des sich nach hinten erstreckenden Abschnitts (112d) und einer zweiten Rippe (78q) zum Führen des sich nach vorne erstreckenden Abschnitts (112e) versehen ist.

2. Konstruktion zur gegenseitigen Koppelung von Bremsen für ein Fahrzeug vom Satteltyp nach Anspruch 1, wobei das plattenförmige Element (78) durch einen hinteren Kotflügel (77) gebildet wird.

3. Konstruktion zur gegenseitigen Koppelung von Bremsen für ein Fahrzeug vom Satteltyp nach Anspruch 1 oder 2, wobei das plattenförmige Element (78) von einer Seite her durch eine Seitenabdeckung (65) abgedeckt ist.

4. Konstruktion zur gegenseitigen Koppelung von Bremsen für ein Fahrzeug vom Satteltyp nach einem der Ansprüche 1 bis 3, wobei
die erste Rippe (78m) einen Raum (131) bildet mit einem Querschnitt in Gestalt eines Langlochs, wobei der Raum (131) zwischen der ersten Rippe (78m) und einem in dem plattenförmigen Element (78) abgestuften Abschnitt (78h) gebildet ist, und eine Höhe des Raumes (131) mit der Langlochform so eingestellt ist, dass diese größer ist als ein Außendurchmesser des Koppelungsbremskabels (112).

5. Konstruktion zur gegenseitigen Koppelung von Bremsen für ein Fahrzeug vom Satteltyp nach einem der Ansprüche 1 bis 4, wobei
die zweite Rippe (78q) zumindest nur einen unteren Abschnitt des Koppelungsbremskabels (112) begrenzt.

6. Konstruktion zur gegenseitigen Koppelung von Bremsen für ein Fahrzeug vom Satteltyp nach einem der Ansprüche 1 bis 5, wobei
ein unterer Abschnitt des plattenförmigen Elements (78) einen Vorsprung (78d) aufweist, der sich vor der ersten Rippe (78m) erstreckt, und der Vorsprung (78d) sich bis zu einer Verbindung zwischen dem Koppelungsbremskabel (112) und dem Ausgleicher (111) erstreckt.

7. Konstruktion zur gegenseitigen Koppelung von Bremsen für ein Fahrzeug vom Satteltyp nach einem der Ansprüche 1 bis 6, wobei
der gekrümmte Abschnitt (112a) an einer Seite eines Raums (155) angeordnet ist, welcher durch den Unterrahmen (26), den Sitzrahmen (24) und den Mittelrahmen (23) gebildet wird, und eine Ausformung entlang des Unterrahmens (26) und des Sitzrahmens (24) aufweist.

8. Konstruktion zur gegenseitigen Koppelung von Bremsen für ein Fahrzeug vom Satteltyp nach einem der Ansprüche 1 bis 7, wobei
in dem plattenförmigen Element (78) eine an einer hinteren Oberfläche des Hilfsrahmens (26) befestigte und dem Hinterrad (16) zugewandte Rückwand (78a) einstückig mit einer Seitenwand (78b) ausgebildet ist, welche sich entlang einer Seitenoberfläche des Hilfsrahmens (26) von einer Seitenkante einer rechten Seite der Rückwand (78a) nach vorne erstreckt, und die erste Rippe (78m) und die zweite Rippe (78q) in der Seitenwand (78b) ausgebildet sind.

## Revendications

1. Structure de frein à verrouillage pour un véhicule de type à selle, la structure de frein comprenant :
un cadre de caisse de véhicule (11) qui comporte un cadre principal (22) s'étendant vers l'arrière par rapport à une caisse de véhicule depuis une tête de direction (21), un cadre central (23) s'étendant vers le bas par rapport à la caisse de véhicule depuis le cadre principal (22), un cadre de selle (24) s'étendant vers l'arrière depuis le cadre principal (22), et un faux cadre (26) raccordant chacun du cadre de selle (24) et du cadre central (23) l'un à l'autre ;
un frein de roue avant (91) pour freiner une roue avant (13) ;
un frein de roue arrière (92) pour freiner une roue arrière (16), le frein de roue avant (91) et le frein de roue arrière (92) étant constitués chacun d'un frein à tambour, le frein de roue avant (91) étant disposé sur un côté gauche de la caisse de véhicule ;
un élément de fonctionnement de frein de roue arrière (94), pour activer le frein de roue arrière (92), qui est disposé sur un côté droit de la caisse de véhicule ; et
un câble de frein à verrouillage (112) dont une extrémité est raccordée à l'élément de fonctionnement de frein de roue arrière (94) via un palonnier (111), dans laquelle
le câble de frein à verrouillage (112) a une portion courbée (112a) formée pour être courbée de manière saillante vers l'arrière depuis le côté palonnier (111), suivie d'une extension vers l'avant, et l'autre extrémité du câble de frein à verrouillage (112) s'étendant vers l'avant est raccordée au frein de roue avant (91), de sorte qu'une force de freinage est appliquée à la fois au frein de roue arrière (92) et au frein de roue avant (91) en réponse à un fonctionnement de l'élément de fonctionnement de frein de roue arrière (94),
**caractérisée en ce que**
la portion courbée (112a) comporte une portion d'extension vers l'avant (112e) s'étendant vers l'avant depuis une extrémité arrière (112c) de la portion courbée (112a), et une portion d'extension vers l'arrière (112d) s'étendant vers l'arrière depuis le côté palonnier (111), et
un organe de type plaque (78) est prévu entre la portion courbée (112a) et le cadre de caisse de véhicule (11), et l'organe de type plaque (78) est pourvu d'une première nervure (78m) pour guider la portion d'extension vers l'arrière (112d), et d'une deuxième nervure (78q) pour guider la portion d'extension vers l'avant (112e).

2. Structure de frein à verrouillage pour un véhicule de type à selle selon la revendication 1, dans laquelle
l'organe de type plaque (78) est constitué d'un garde-boue arrière (77).

3. Structure de frein à verrouillage pour un véhicule de type à selle selon la revendication 1 ou 2, dans laquelle
l'organe de type plaque (78) est couvert d'un carter de côté (65) depuis un côté.

4. Structure de frein à verrouillage pour un véhicule de type à selle selon l'une quelconque des revendications 1 à 3, dans laquelle
la première nervure (78m) forme un espace (131) ayant une section en coupe en forme de trou allongé, l'espace (131) étant formé entre la première nervure (78m) et une portion étagée (78h) prévue dans l'organe de type plaque (78), et une hauteur de l'espace (131) ayant la forme de trou allongé est établie pour être plus grande qu'un diamètre externe du câble de frein à verrouillage (112).

5. Structure de frein à verrouillage pour un véhicule de type à selle selon l'une quelconque des revendications 1 à 4, dans laquelle
la deuxième nervure (78q) restreint au moins uniquement une portion inférieure du câble de frein à verrouillage (112).

6. Structure de frein à verrouillage pour un véhicule de type à selle selon l'une quelconque des revendications 1 à 5, dans laquelle
une portion inférieure de l'organe de type plaque (78) comporte une saillie (78d) s'étendant vers l'avant de la première nervure (78m), et la saillie (78d) s'étend jusqu'à un raccordement entre le câble de frein à verrouillage (112) et le palonnier (111).

7. Structure de frein à verrouillage pour un véhicule de type à selle selon l'une quelconque des revendications 1 à 6, dans laquelle
la portion courbée (112a) est disposée sur un côté latéral d'un espace (155) formé par le faux cadre (26), le cadre de selle (24), et le cadre central (23), et a une forme le long du faux cadre (26) et du cadre de selle (24).

8. Structure de frein à verrouillage pour un véhicule de type à selle selon l'une quelconque des revendications 1 à 7, dans laquelle
dans l'organe de type plaque (78), une paroi arrière (78a) attachée à une surface de dos du faux cadre (26) et en regard de la roue arrière (16) est formée d'un seul tenant avec une paroi de côté (78b) s'étendant vers l'avant le long d'une surface de côté du faux cadre (26) depuis un bord de côté d'un côté droit de la paroi arrière (78a), et la première nervure (78m) et la deuxième nervure (78q) sont formées dans la paroi de côté (78b).
